# EUROPEAN PATENT SPECIFICATION

(11) **EP 1 322 541 B1**
(45) Date of publication and mention of the grant of the patent: **30.11.2005**
(21) Application number: 01974641.1
(22) Date of filing: 24.09.2001
(51) Int. Cl.: B66F 1/00

(54) **TWO SIDED SYSTEM FOR LOADING TRUCKS**
SYSTEM ZUM ZWEISEITIGEM LADEN VON LASTKRAFTWAGEN
SYSTEME DE CHARGEMENT DE CAMION A DEUX COTES

(30) Priority: 05.10.2000 IL 13887900
(43) Date of publication of application: 02.07.2003
(73) Proprietor: Ofakim Nerhavim Construction and Investments 1990 Ltd., 49102 Petach-Tikva (IL)
(72) Inventor: RAZ, Zvi, 49407 Petach-Tikva (IL)
(74) Representative: Leone, Mario
(86) International application number: PCT/IL2001/000888
(87) International publication number: WO 2002/028762

(56) References cited:
- EP-A- 0 775 666
- CH-A- 358 380
- FR-A- 2 278 530
- FR-A- 2 325 536
- FR-A- 2 503 644
- FR-A- 2 517 268
- FR-A- 2 592 644

## Description

The present invention relates to a lifting device. The lifting device, in accordance with the present invention, should in particular be adapted to be mounted on conventional trucks and trailers and to be usable for loading, handling and carrying of heavy loads, large containers and vehicles. (Hereinafter called "loaded vehicles").

There are known various lifting devices for the above purpose, inter alia, the following:
1. A side fork lift in which the teeth of the fork lift are activated perpendicularly to the movement direction. In this case the fork lift loads the loads, and moves within the limitation of the movement of the fork lift, e.g. with a restricted speed.
   However, whenever the load is a loaded vehicle, there exists a large possibility of damage caused to the body of said loaded vehicle by the teeth of the fork device.
   Moreover, damages of other parts such as the brakes system, steering system, etc, may be caused by the teeth of the fork lift.
2. Another side fork lift device is described and claimed in Israeli Patent No. 116100, which is the priority application of EP-A1-0 775 666 Claim 1 of said specification claims:
   "a fork lift comprising retractably extendible loading prongs for lifting loads from either side of a vehicle, and a mechanism for displacing said prongs over and across said vehicle, said mechanism for displacing said prongs over and across said vehicle, said mechanism for displacing said prongs comprises a front and a rear transverse girds adapted to be rigidly secured to a chassis of said vehicle, a front and a rear masts, means for simultaneously reciprocating said front and rear masts at their bottoms along said front and rear girders, correspondingly, a longitudinal beam coupled to said front and rear masts, means for reciprocating said beam in a downward-upward motion along said front and rear masts, respectively, and a front and a rear uprights extending downward from said beam and from which said prongs are retractably extendible, correspondingly."

The advantage of this fork-lift solves the problem of the movement after the loading operation has been terminated. The vehicle on which the lift has been loaded can now move like a regular vehicle. However, the risk of damaging the loaded vehicle body still exists.
It has therefore been desirable to design a lifting device which overcomes the above disadvantages, i.e. it should be simple to manufacture and use, not be too expensive and have the required properties, e.g. self loading of a heavy load having any desired volume, on a vehicle in particular on a truck i.e. without the aid of outside means and especially loading all kinds of vehicles on a truck without damaging the loaded vehicle.

The present invention thus consists in a lifting device mountable on a vehicle as defined in claim 1.

In a preferred embodiment according to the present invention said device is mounted on a vehicle e.g. a truck, a trailer and the like.

The device is described herein mounted on a truck. However, the invention is not limited to this embodiment and the device is also protected per se.

In a preferred embodiment of the device according to the present invention the chassis is provided at its front and/or back ends with stabilizing means.

The stabilizing means, if present, are, for example, hydraulic pistons. Said stabilizing means may move into the open and closed position.

The lifting systems in the device according to the present invention are, for example, a hydraulic piston and chains.

The carrying means in the device according to the present invention may be any suitable means which can carry the load, e.g. teeth, plates, combination of plates and teeth, etc. Said carrying means should extend perpendicularly to the lifting system and parallel to the rails.

The connecting means in the device according to the present invention may be any connecting means such as screws, rivets, soldering and welding connections, etc.

In a preferred embodiment of the device according to the present invention the carrying means slide in the lower part of the lifting system from one side to the other. This action enables the carrying means to slide under the loaded vehicle and/or the loaded vehicle may be loaded from both sides of the lifting device.

The actuating means according to the present invention may be e.g. any suitable hydraulic, pneumatic and electric systems or combinations thereof. In a preferred embodiment they are hydraulic actuated motor and chains or pistons or combinations thereof.

When a device -not according to the present invention comprises only one set of two rails on the chassis upon said set of rails only one lifting system is movable. In said embodiment the lifting system may move vertically and along the rails. Moreover, in said embodiment the carrying means has preferably the form of a plate, at each side of which plate are located at least one, preferably two, of outwards projecting teeth. Each tooth has advantageously the possibility of a longitudinal outwards moving movement.

In accordance with a preferred embodiment of the device of the present invention there are present two sets each of two rails which cross the chassis. Upon each of said sets the lower part of one lifting system is movably mounted. In said embodiment each lifting system may move on the corresponding set of rails in the same manner as in the embodiment having only one set of rails. In a preferred embodiment of said device the front and/or the rear set of rails are mounted perpendicularly to a further set of rails and the corresponding lifting system may move also along said further set of rails. In this embodiment the carrying means for each lifting means are advantageously teeth.

The rails may be rails proper or be embedded in a bar or the like. The bar may be an integral part of the chassis.

All parts of the device according to the present invention may be made from any suitable metal, preferably steel or aluminum.

In a further embodiment the device according to the present invention may comprise control systems, e.g. closed circuit television. Said systems may, for example, aid the truck driver to direct the lifting systems besides and/or upon the wheels of the loaded vehicle.

The device according to the present invention may be operated manually or automatically or in a combination thereof.

The operation of the device will be described herein by way of example only. However it is not restricted to this manner of operating.

The operation of the device is, for example, performed as follows:
1. The truck is stopped near the loaded vehicle. In order that the driver may stop the truck in the correct position he may be aided by any suitable control means, e.g. the close circle television, if present.
2. The driver lowers the stabilizing means to the ground.
3. The lifting system(s) are lowered nearly the ground and thereafter are moved below the loaded vehicle and besides the wheels of said vehicle, i.e. each wheel is located in the space between the teeth when the carrying means are teeth; or alternatively when the carrying means are a plate along each side of which extend outwards projecting teeth, each wheel is preferably located on a tooth. Should two set of lifting systems be part of the device, the front and/or the rear lifting system of the truck is placed besides the front and/or the rear wheels of the loading vehicle and the other lifting system moves above the longitudinal rails to adjust to the other pair of wheels.
4. The carrying means of the lifting system(s) are coupled to the wheels of the loaded vehicle.
5. Thereafter, the loaded vehicle is lifted and afterwards the lifting system(s) are located upon the chassis together with the loaded vehicle.
6. The stabilizing means are lifted and the truck then continues its movement.

The present invention will now be illustrated with reference to the accompanying drawings without being limited by same. (Identical parts appearing in several Figs. are referenced by the same numerals). In said drawings:
Fig. 1 shows a perspective view of a device according to the present invention mounted on a truck in the original position in which device the carrying means are teeth;
Fig. 2 shows a perspective view of the device shown in Fig. 1, in which the carrying means are lowered to the ground level;
Fig. 3 shows a perspective view of the device shown in Figs. 1 and 2, wherein the carrying means are below the loaded vehicle;
Fig. 4 shows a perspective view of the device shown in Figs. 1 to 3, wherein the carrying means are in the lifting position; Fig. 5 shows a perspective view of the device shown in Figs. 1 to 4, wherein the carrying means are back on the chassis and the truck is ready to move;
Figs. 6A-E show the various positions of the loading operation of a loaded vehicle of the device illustrated in Figs. 1-5;
Figs. 7A and B show the operation of one set of teeth serving as carrying means of the device shown in Figs. 1 to 6;
Fig. 8 shows a perspective view of another device -not according to the present invention- mounted on a truck, in which device the carrying means are a plate along which extend teeth; and
Figs. 9A-D show the various positions of the loading operation of a vehicle on the device illustrated in Fig. 8.

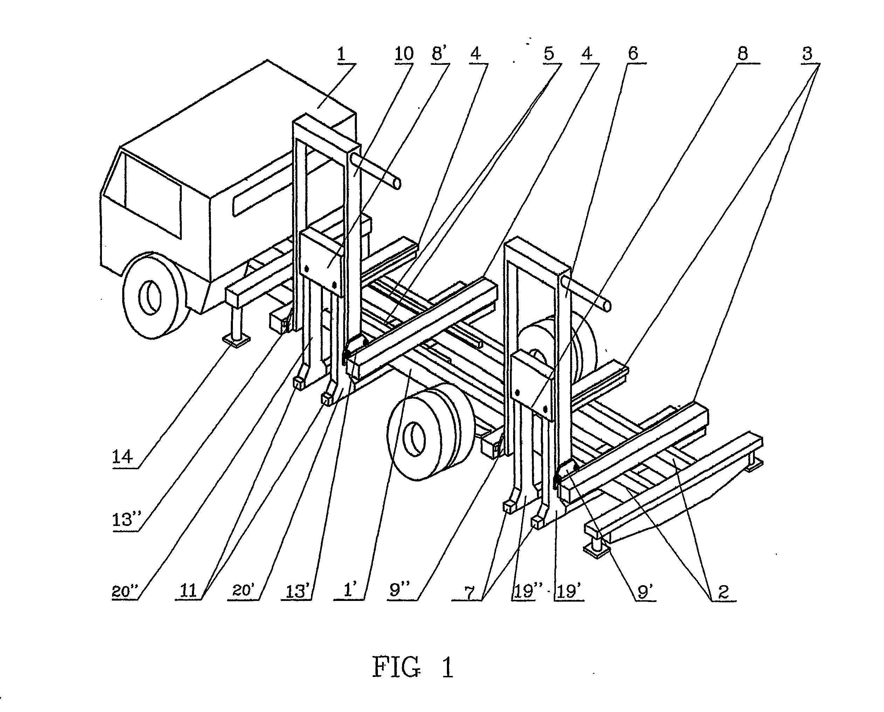

In Figs. 1 to 6 are shown truck 1 on which chassis 2 is mounted and connected to track chassis 1'. The rear set of two rails 3 are connected to chassis 2 and the front set of two rails 4 are movable on rails 5. Rear lifting system 6 is provided with carrying means 7, e.g. teeth 7' and 7" and teeth sliding mechanism 19' and 19". Said rear lifting system 6 has the possibilities to move upwards and downwards by the action of part 8 and to move on rails 3 by the action of parts 9' and 9". Front lifting system 10 is provided with carrying means 11, e.g. teeth 11' and 11'' and teeth sliding mechanism 20' and 20". Said front lifting system has the possibility to move upward and downward by action of part 8' and to move on rails 4 by the action of parts 13' and 13". Moreover, front lifting system 10 may move together with rails 4 on rails 5. Part 8 and/or 8' and parts 9' and/or 9'' and 13' and/or 13'' and 19' and/or 19" and 20' and/or 20" in accordance with the present invention may be inter alia hydraulic or pneumatic or electrical means.

For easy reference all parts except track 1 are called hereinafter device 15.

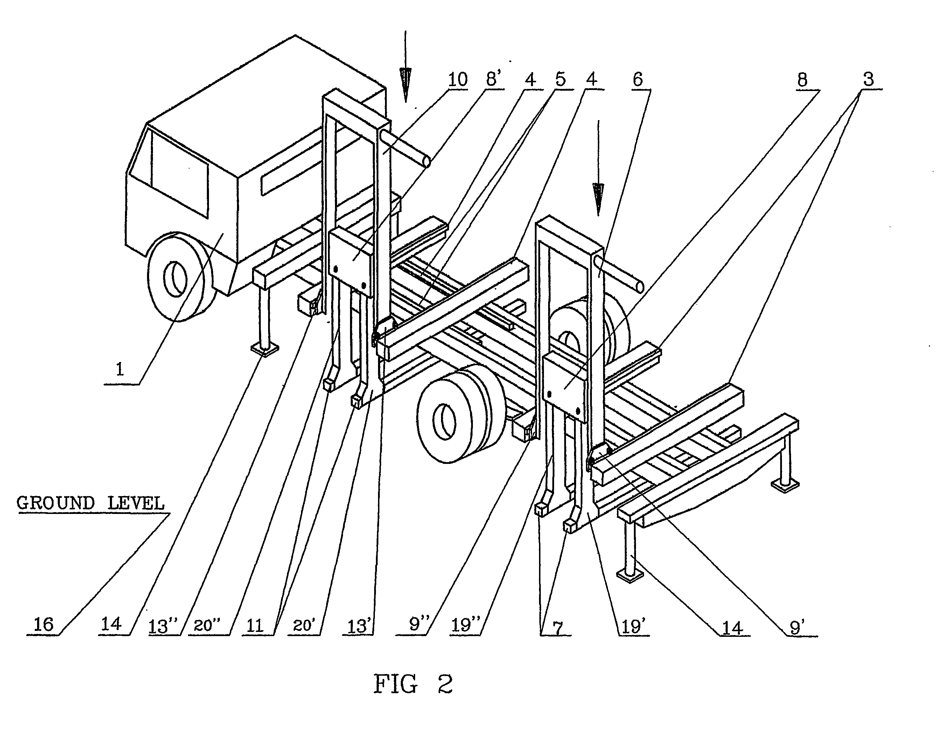

Figures 2 to 5 show some movements of the device 15 shown in Fig. 1 as follows:
Fig. 2 shows truck 1 in which front and rear stabilizers 14 have been put on ground 16 and carrying means 7 (i.e. 7' and 7") and 11 (i.e. 11' and 11") are lowered to ground level 16, i.e. lifting systems 6 and 10 are lowered;

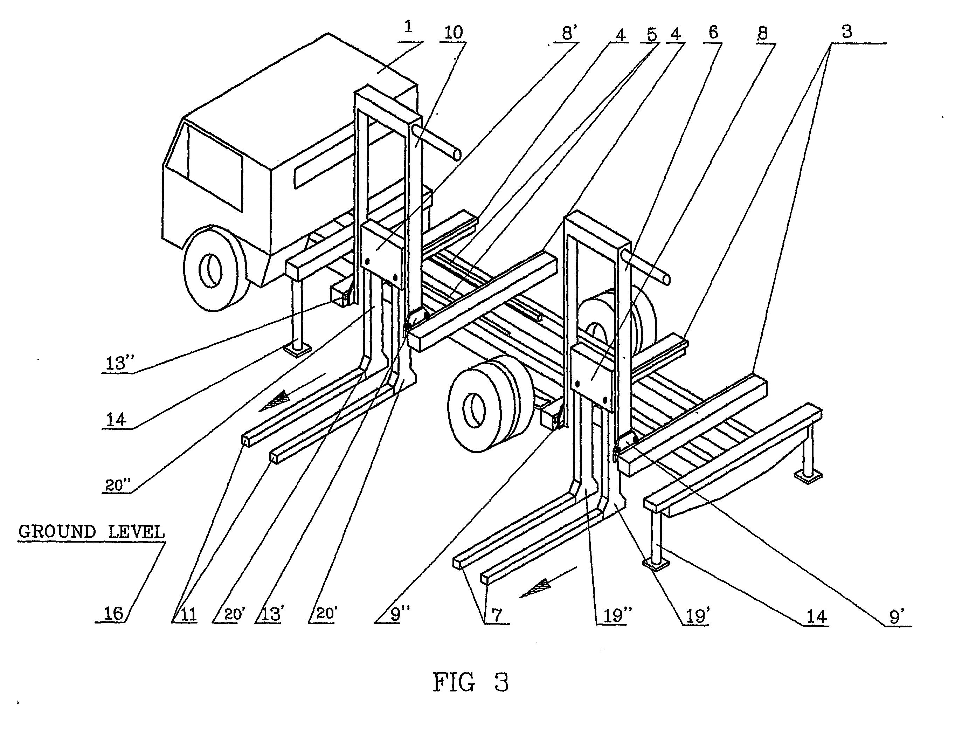

Fig. 3 shows truck 1 in which carrying means 7 and 11 are moved forward below the loaded vehicle (not shown) by the action of parts 19' and 19" and 20' and 20" respectively.

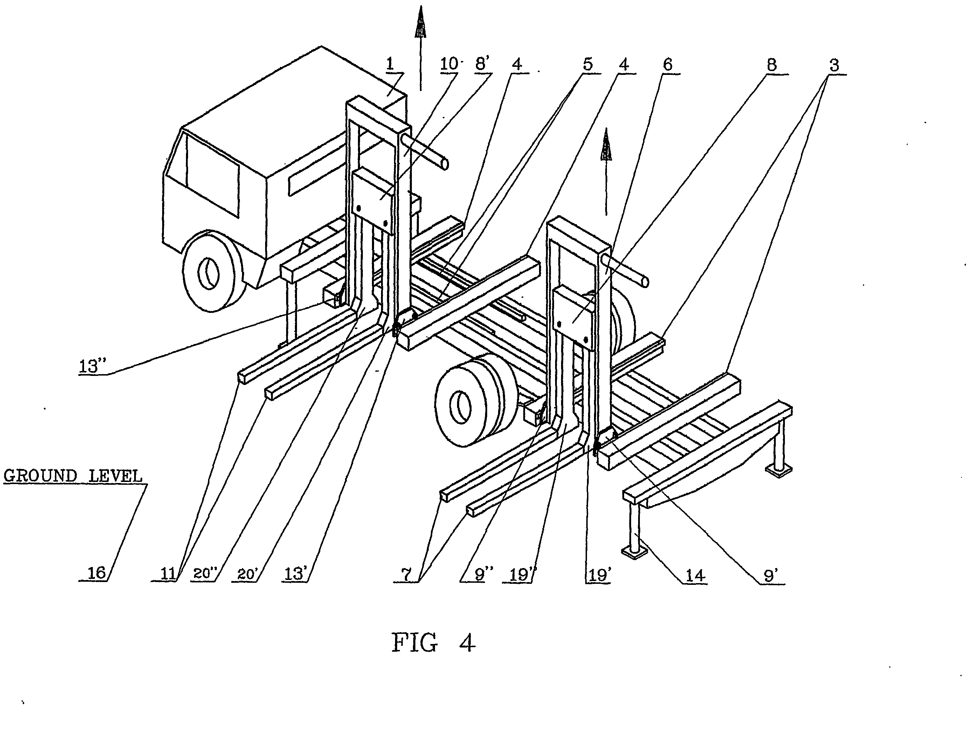

Fig. 4 shows truck 1, in which carrying means 7 and 11 are in the carrying position i.e. lifting systems 6 and 10 are raised upward by part 8' and part 8" respectively.

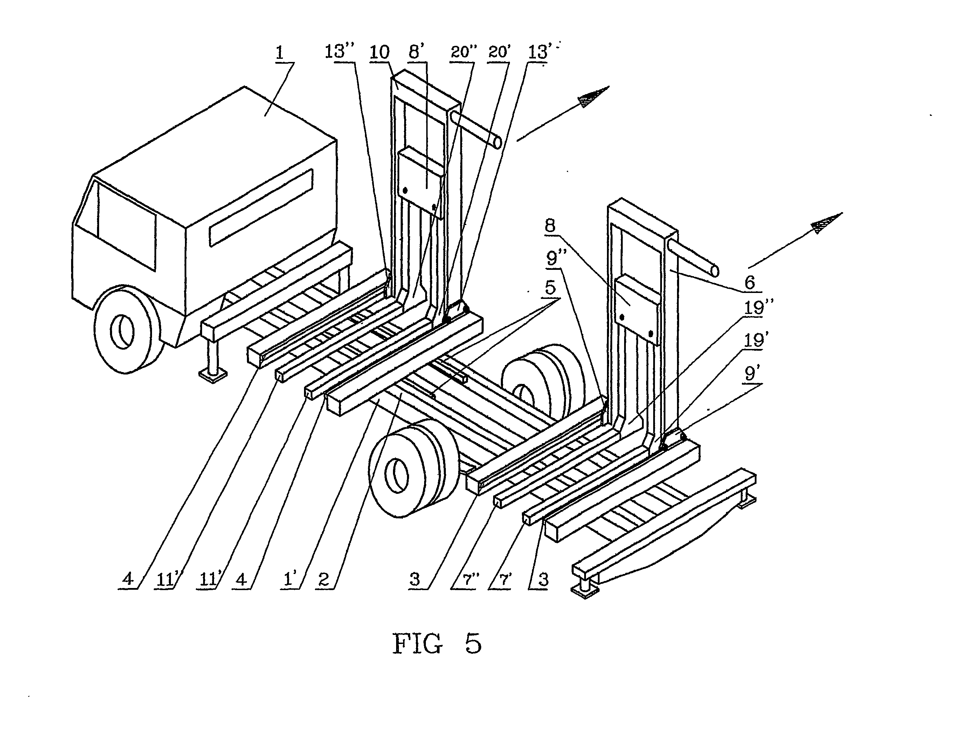

Fig. 5 shows truck 1 in which carrying means 7 and 11 are back on chassis 2 i.e. lifting systems 6 and 10 are moved backwards by its parts 9' and 9" and 13' and 13" respectively.

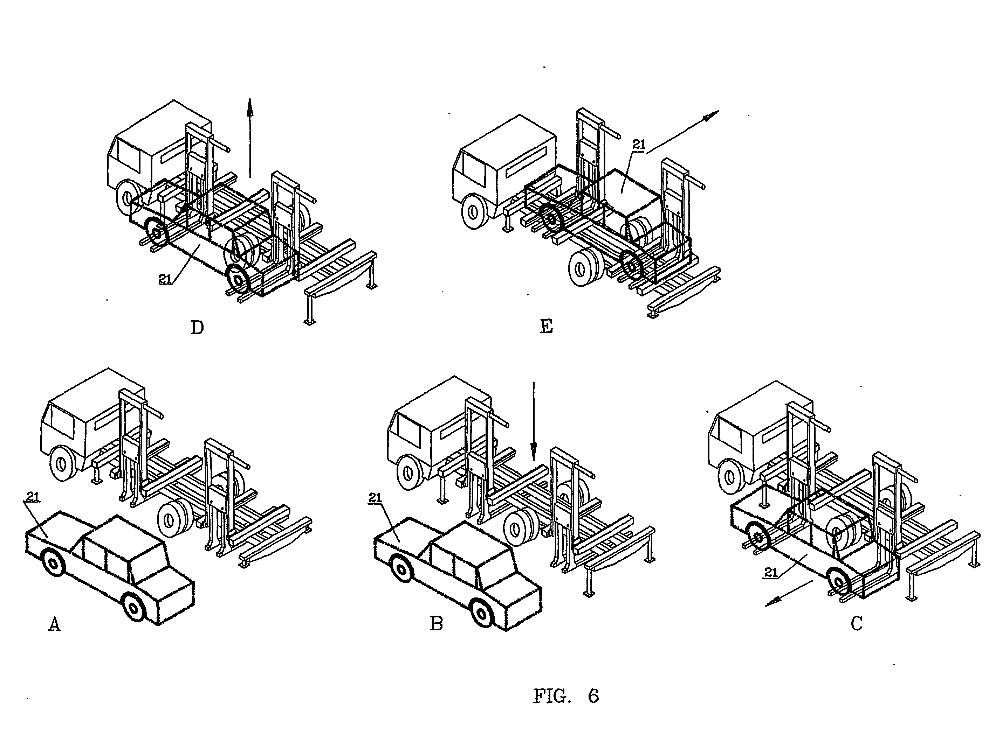

Figs. 6A-E show the various positions of the loading operation of a loaded vehicle on the device illustrated in Figs. 1-5, as follows:
   Fig. 6A shows truck 1 comprising device 15 in the original position besides loaded vehicle 21 i.e. carrying means 7 and 11 are located under truck chassis 1';
   Fig. 6B shows stabilizers 14 being located on ground 16. Moreover, lifting systems 6 and 10 are lowered almost to ground 16;
   Fig. 6C shows carrying means 7 and 11 below loaded vehicle 21 i.e. lifting systems 6 and 10 have been moved forward and loading vehicle's wheels 21 are between teeth 7 and 11;
   Fig. 6D shows carrying means 7 and 11 in the carrying position i.e. lifting systems 6 and 10 have been lifted upwards together with vehicle 21;
   Fig. 6E shows lifting systems 7 and 11 being returned to their original position together with vehicle 21; and stabilizing means 14 are lifted.

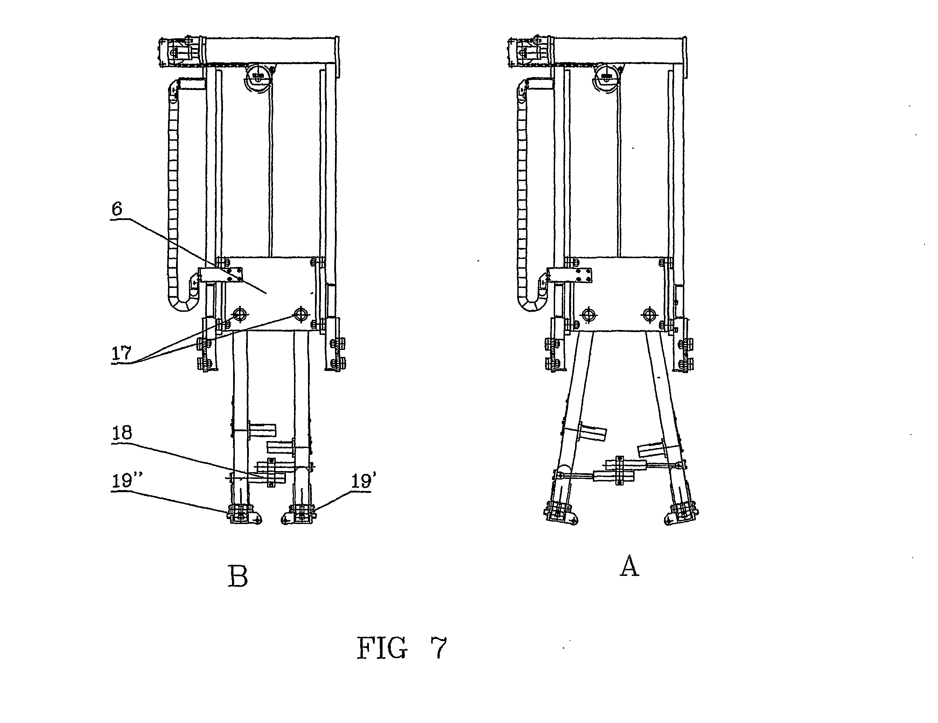

   Figs. 7A and 7B show the operation of one set of teeth serving as carrying means as follows: (said operation is described for rear carrying means 7 however the same applies to front carrying means 11)

Each tooth 7 i.e. tooth 7' and 7" is connected via axis 17 to lifting system 6. The two teeth 7 and 7' are connected each other by piston 18. When piston 18 is in the open position (Fig. 7A) the space between teeth 7' and 7'' is large and when piston 18 is in the closed position (Fig. 7B) the space between teeth 7' and 7" is small.

Carrying means 7 and 11 may be operated by both sides i.e. teeth 7' and 7" may slide via parts 19' and 19" respectively, and teeth 11' and 11" may slide via parts 20' and 20", respectively.

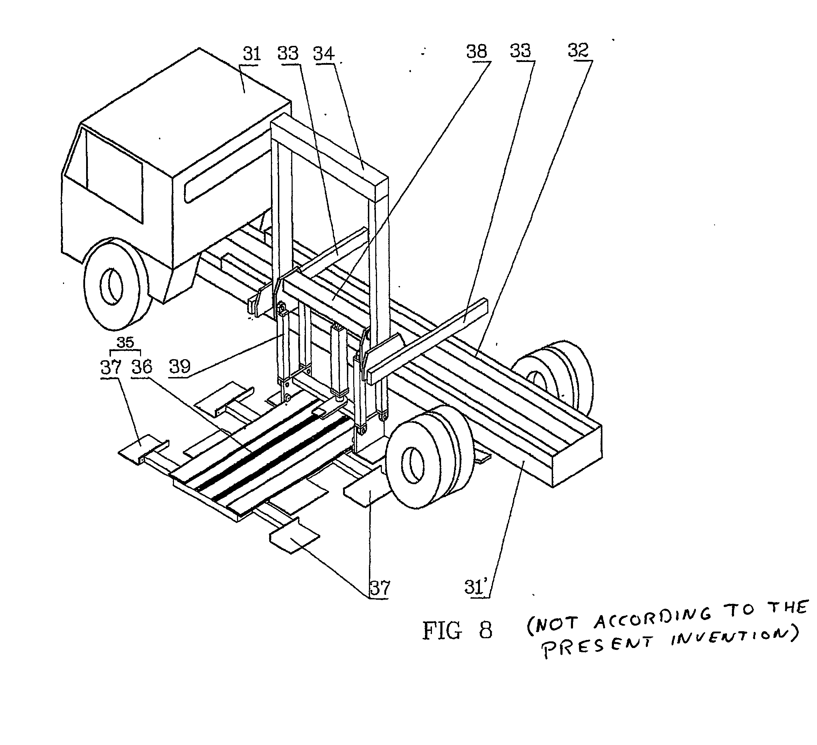

In Fig. 8 -not according to the present invention- are shown truck 31 on which chassis 32 is mounted and connected to track chassis 31'. One set of two rails 33 are connected to chassis 32. Lifting system 34 being provided with carrying means 35 consisting of plate 36 along each side of which extends one line, preferably two lines of outwards projecting teeth 37. Said lifting system 34 having the possibilities of lifting and lowering the position by part 38 and moving on rails 33. Also shown mechanism 39 for bringing carrying means 35 near to vehicle 21'. Part 38 in accordance with the present invention may be inter alia hydraulic, pneumatic or electrical means.

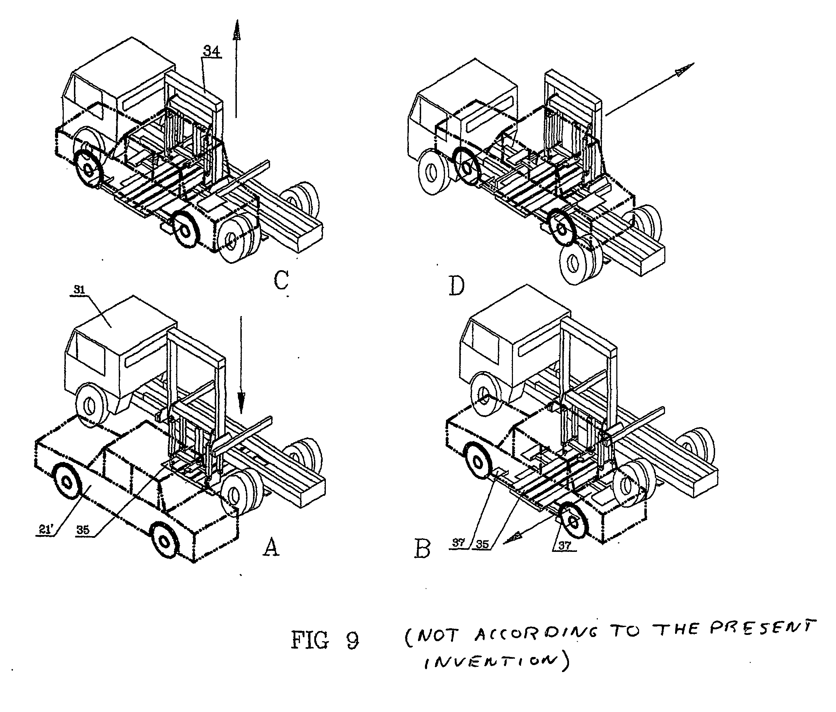

Figs. 9A-D show the various positions of the loading operation of a loaded vehicle on the device illustrated in Fig. 8, as follows:
Fig. 9A shows truck 31 beside loaded vehicle 21' whereas carrying means 35 are located under truck chassis 31';
Fig. 9B shows carrying means 35 are under loaded vehicle 21' i.e. plate 36 and projecting teeth 37. Projecting teeth 37 are under loaded vehicle wheels 21';
Fig. 9C shows lifting system 34 lifted upward; and
Fig. 9D shows lifting system 34 being returned backward with loading vehicle 21' on truck 31.

In all Figs. the arrows indicate the direction of the movement.

## Claims

1. A lifting device (15) mountable on a vehicle (1) comprising:
a chassis (1') which is connectable to the vehicle (1); said chassis (1') having a front set (4) and a rear set (3) of rails, each set comprising two rails crossing the chassis perpendicularly to the moving direction of the vehicle;
said rails being connected by suitable means to opposite sides of the chassis;
a lifting system (10, 6) being movably mounted on each set of rails;
the lifting system extending vertically to the rails and being provided with carrying means (7, 11) extending perpendicularly to the lifting system;
all parts being connected to each other by suitable connecting means and actuated by suitable actuating means;
wherein at least one of the front and rear set (4, 3) of rails is movably mounted perpendicularly to a further set (5) of rails.

2. A lifting device according to claim 1, wherein the carrying means (7, 11) comprise two teeth (7', 7", 11', 11"), each tooth (7', 7", 11', 11") being connected via an axis (17) to the lifting system, which axis (17) is perpendicular to the lifting system.

3. A lifting device according to claim 1, wherein the carrying means (7, 11) comprise two teeth (7', 7", 11', 11"), each teeth (7', 7", 11', 11") being slidably arranged in the lower part of the lifting system from one side of the chassis to the other side.

4. A lifting device according to one of the preceding claims, being mounted on a truck (1).

5. A lifting device according to one of the preceding claims, wherein the chassis (1') of the device is provided at its front and/or back ends with stabilizing means (14).

6. A lifting device according to claim 5, wherein the stabilizing means (14) are hydraulic pistons.

7. A lifting device according to any of claims 1 to 6, wherein the lifting systems (6, 10) are hydraulic pistons and chains.

8. A lifting device according to claim 1, wherein the carrying means (7, 11) are selected among teeth, plates and a combination thereof.

9. A lifting device according to any of claims 1 to 8, wherein the carrying means (7, 11) are removable.

10. A lifting device according to claims 1 to 9, wherein the actuating means are selected among hydraulic, pneumatic and electric systems or combinations thereof.

11. A lifting device according to claim 10, wherein the actuating means are hydraulic actuated motor and chains or pistons.

12. A lifting device according to any of claims 1 to 11, wherein the rails (3, 4, 5) are embedded in a bar, said bar being an integral part of the chassis.

13. A lifting device according to any of claims 1 to 12, wherein all parts are made from a metal selected among steel and aluminium.

14. A lifting device according to any of claims 1 to 13, comprising a control system for aiding to direct a lifting system besides and/or upon the wheels of a vehicle to be loaded, said control system comprising a closed circuit television.

## Patentansprüche

1. Auf einem Fahrzeug (1) montierbare Hebevorrichtung (15), umfassend:
ein Chassis (1') welches mit dem Fahrzeug (1) verbindbar ist, wobei das Chassis (1') einen vorderen Satz (4) und einen hinteren Satz (3) von Schienen umfasst, jeder Satz zwei Schienen umfasst, die das Chassis senkrecht zu der Bewegungsrichtung des Fahrzeugs überqueren;
wobei die Schienen mittels geeigneter Einrichtungen mit gegenüberliegenden Seiten des Chassis verbunden sind;
ein Hebesystem (10, 6), das beweglich auf jedem Schienensatz montiert ist, wobei sich das Hebesystem vertikal zu den Schienen erstreckt, und mit einer sich senkrecht zu dem Hebesystem erstreckenden einer Trageeinrichtung (7, 11) versehen ist;
wobei alle Teile miteinander über geeignete Verbindungseinrichtungen verbunden sind, und durch geeignete Betätigungseinrichtungen betätigt werden.
wobei wenigstens einer von den vorderen und hinteren Sätzen (4, 3) der Schienen senkrecht zu einem weiteren Satz (5) von Schienen beweglich montiert ist.

2. Hebevorrichtung nach Anspruch 1, wobei die Trageeinrichtung (7, 11) zwei Zähne (7', 7", 11', 11 ") umfasst, wobei jeder Zahn (7', 7", 11', 11 ") über eine Achse (17) mit dem Hebesystem verbunden ist, wobei diese Achse (17) rechtwinklig zu dem Hebesystem ist.

3. Hebevorrichtung nach Anspruch 1, wobei die Trageeinrichtung (7, 11) zwei Zähne (7', 7", 11', 11") umfasst, wobei jeder Zahn (7', 7", 11', 11 ") verschiebbar in dem unteren Teil des Hebesystems von einer Seite des Chassis zu der anderen Seite angeordnet ist.

4. Hebevorrichtung nach einem der vorstehenden Ansprüche, die auf einem Lastwagen (1) montiert ist.

5. Hebevorrichtung nach einem der vorstehenden Ansprüche, wobei das Chassis (1') der Vorrichtung an seinen vorderen und/oder hinteren Enden mit Stabilisierungseinrichtungen (14) versehen ist.

6. Hebevorrichtung nach Anspruch 5, wobei die Stabilisierungseinrichtungen (14) hydraulische Kolben sind.

7. Hebevorrichtung nach einem der Ansprüche 1 bis 6, wobei die Hebesysteme (6, 10) hydraulische Kolben und Ketten sind.

8. Hebevorrichtung nach Anspruch 1, wobei die Trageeinrichtungen (7, 11) zwischen Zähnen, Platten und Kombinationen davon ausgewählt sind.

9. Hebevorrichtung nach einem der Ansprüche 1 bis 8, wobei die Trageeinrichtungen (7, 11) abnehmbar sind.

10. Hebevorrichtung nach einem der Ansprüche 1 bis 8, wobei die Betätigungseinrichtungen aus hydraulischen, pneumatischen und elektrischen System oder Kombinationen dieser ausgewählt sind.

11. Hebevorrichtung nach Anspruch 10, wobei die Betätigungseinrichtungen hydraulisch betätigte Motoren und Ketten oder Kolben sind.

12. Hebevorrichtung nach einem der Ansprüche 1 bis 11, wobei die Schienen (3, 4, 5) in einem Balken eingebettet sind, wobei der Balken ein integrierter Teil des Chassis ist.

13. Hebevorrichtung nach einem der Ansprüche 1 bis 12, wobei alle Teile aus einem aus Stahl und Aluminium ausgewählten Metall bestehen.

14. Hebevorrichtung nach einem der Ansprüche 1 bis 13, das ein Steuersystem zur Unterstützung der Führung eines Hebesystems neben und/oder auf den Rädern eines zu ladenden Fahrzeugs umfasst, wobei das Steuersystem eine Videoüberwachungseinrichtung umfasst.

## Revendications

1. Dispositif de levage (15) pouvant être monté sur un véhicule (1) comprenant :
un châssis (1') qui peut être relié au véhicule (1) ; ledit châssis (1') ayant un jeu avant (4) et un jeu arrière (3) de rails, chaque jeu comprenant deux rails traversant le châssis perpendiculairement à la direction de déplacement du véhicule ;
lesdits rails étant connectés par des moyens appropriés aux côtés opposés du châssis ;
un système de levage (10, 6) qui est monté de façon mobile sur chaque jeu de rails ;
le système de levage s'étendant verticalement vers les rails et étant pourvu de moyens porteurs (7, 11) s'étendant perpendiculairement au système de levage ;
toutes les pièces étant connectées les unes aux autres par des moyens de connexion appropriés et actionnées par des moyens d'actionnement appropriés ;
dans lequel au moins l'un des jeux avant et arrière (4, 3) de rails est monté de façon mobile perpendiculairement à un autre jeu (5) de rails.

2. Dispositif de levage selon la revendication 1, dans lequel les moyens porteurs (7, 11) comprennent deux dents (7', 7", 11', 11"), chaque dent (7', 7", 11', 11") étant connectée via un axe (17) au système de levage, lequel axe (17) est perpendiculaire au système de levage.

3. Dispositif de levage selon la revendication 1, dans lequel les moyens porteurs (7, 11) comprennent deux dents (7', 7", 11', 11"), chaque dent (7', 7", 11', 11") étant agencée de façon coulissante dans la partie inférieure du système de levage d'un côté du châssis à l'autre côté.

4. Dispositif de levage selon l'une des revendications précédentes, monté sur un camion (1).

5. Dispositif de levage selon l'une des revendications précédentes, dans lequel le châssis (1') du dispositif est pourvu sur ses extrémités avant et/ou arrière de moyens stabilisateurs (14).

6. Dispositif de levage selon la revendication 5, dans lequel les moyens stabilisateurs (14) sont des pistons hydrauliques.

7. Dispositif de levage selon l'une quelconque des revendications 1 à 6, dans lequel les systèmes de levage (6, 10) sont des pistons hydrauliques et des chaînes.

8. Dispositif de levage selon la revendication 1, dans lequel les moyens porteurs (7, 11) sont choisis parmi des dents, plaques et une combinaison de celles-ci.

9. Dispositif de levage selon l'une quelconque des revendications 1 à 8, dans lequel les moyens porteurs (7, 11) sont amovibles.

10. Dispositif de levage selon les revendications 1 à 9, dans lequel les moyens d'actionnement sont choisis parmi des systèmes hydrauliques, pneumatiques et électriques ou des combinaisons de ceux-ci.

11. Dispositif de levage selon la revendication 10, dans lequel les moyens d'actionnement sont un moteur à actionnement hydraulique et des chaînes ou pistons.

12. Dispositif de levage selon l'une quelconque des revendications 1 à 11, dans lequel les rails (3, 4, 5) sont intégrés dans une barre, ladite barre faisant partie intégrante du châssis.

13. Dispositif de levage selon l'une quelconque des revendications 1 à 12, dans lequel toutes les pièces sont faites d'un métal choisi parmi l'acier et l'aluminium.

14. Dispositif de levage selon l'une quelconque des revendications 1 à 13, comprenant un système de commande pour aider à diriger un système de levage à côté et/ou sur les roues d'un véhicule à charger, ledit système de commande comprenant une télévision en circuit fermé.
